Europäisches Patentamt
European Patent Office
Office européen des brevets

(19)

(11) Publication number: **0 606 632 A1**

(12) **EUROPEAN PATENT APPLICATION**

(21) Application number: **93120683.3**

(51) Int. Cl.5: **C09B 67/20**, C09B 67/22

(22) Date of filing: **22.12.93**

(30) Priority: **25.12.92 JP 346402/92**
**22.07.93 JP 181641/93**
**22.07.93 JP 181642/93**
**22.07.93 JP 181643/93**

(43) Date of publication of application:
**20.07.94 Bulletin 94/29**

(84) Designated Contracting States:
**CH DE FR GB LI**

(71) Applicant: **SUMITOMO CHEMICAL COMPANY, LIMITED**
**5-33, Kitahama 4-chome**
**Chuo-ku**
**Osaka(JP)**

(72) Inventor: **Inoue, Hiroki**
**10-3-312, Sonehigashinocho-2-chome**
**Toyonaka-shi(JP)**
Inventor: **Senba, Hideki**
**7-20, Honmachi-8-chome**
**Toyonaka-shi(JP)**
Inventor: **Hayashi, Yoshiaki**
**1-6, Keyakidai-4-chome**
**Sanda-shi(JP)**
Inventor: **Akita, Makoto**
**2-40, Hirata-1-chome**
**Ibaraki-shi(JP)**
Inventor: **Ito, Keisuke**
**10-4-427, Sonehigashinocho-2-chome**
**Toyonaka-shi(JP)**

(74) Representative: **VOSSIUS & PARTNER**
**Siebertstrasse 4**
**D-81675 München (DE)**

(54) **Pigment compounds and application thereof.**

(57) The invention provides a pigment compound which improves characteristics of organic pigments, especially flowability and non-flocculation properties when added to the organic pigments. The pigment compound is represented in the form of a free acid by the following formula (I):

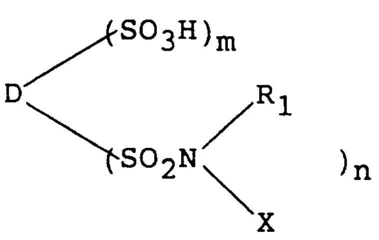

(I)

wherein D represents an organic pigment residue excluding azo and phthalocyanine pigment residues; $R_1$ represents a substituted or unsubstituted and saturated or unsaturated aliphatic hydrocarbon group having 1-10 carbon atoms or a substituted or unsubstituted aromatic hydrocarbon group having 6-10 carbon atoms; X represents a heterocyclic ring-substituted alkyl group, the alkyl group having 1-6 carbon atoms and being substituted on a carbon atom of a heterocyclic ring having at least one of nitrogen atom, oxygen atom and sulfur atom, or

EP 0 606 632 A1

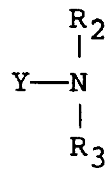

in which Y represents a straight or branched alkylene group having 1-10 carbon atoms, $R_2$ and $R_3$ independently of one another represent a substituted or unsubstituted and saturated or unsaturated aliphatic hydrocarbon group having 1-20 carbon atoms or a substituted or unsubstituted aromatic hydrocarbon group having 6-20 carbon atoms, or both $R_2$ and $R_3$ are taken together with the adjacent nitrogen atom to form a heterocyclic ring having at least one nitrogen atom, and optionally an oxygen or sulfur atom; or $R_1$ is taken together with the adjacent nitrogen atom and the

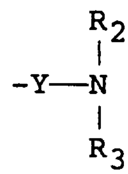

to form a heterocyclic ring having at least two nitrogen atoms; m is a number of 0-3 with the proviso that m is a number of 1-3 when $R_1$ is an unsubstituted aliphatic hydrocarbon group; n is a number of 1-4; and a total of m and n is 1-5.

The present invention relates to pigment compounds and their application.

In non-aqueous dispersion systems such as paints and printing inks, pigments sometimes flocculate to bring about various problems such as sedimentation, increase in viscosity, decrease in coloring power and color segregation when mixed with other pigments. For solving these problems caused by decrease in flowability and by flocculation, many proposals have been made mainly on phthalocyanine and quinacridone pigments. For example, Japanese Patent Kokoku (Post-Exam. Publication) Nos.41-2466 and 50-4019 disclose incorporation of sulfonation products or metal salts of pigments, Japanese Patent Kokoku (Post-Exam. Publication) Nos.38-2713 and 39-16787 disclose incorporation of substituted aminomethyl compounds and USP 2761868 and Japanese Patent Kokai (Laid-Open) No.55-108466 disclose incorporation of phthalimide methyl compounds.

However, according to these known processes, the non-flocculation properties can be improved to some extent, but color segregation still occurs much when mixed with white pigments and satisfactory results have not yet been obtained.

Furthermore, Japanese Patent Kokai (Laid-Open) No.1-213366 and Japanese Patent Kokoku (Post-Exam. Publication) No.1-34268 disclose pigment compounds for solving these defects. However, these pigment compounds are still insufficient.

Accordingly, an object of the present invention is to provide a pigment compound useful for improving characteristics of organic pigments, particularly such as flowability and non-flocculation properties.

The present invention provides a pigment compound represented in the form of a free acid by the following formula (I):

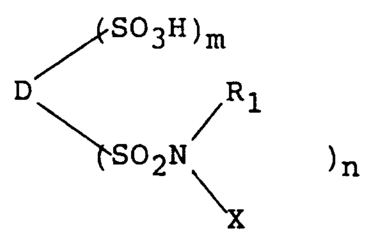

(I)

wherein D represents an organic pigment residue excluding azo and phthalocyanine pigment residues; $R_1$ represents a substituted or unsubstituted and saturated or unsaturated aliphatic hydrocarbon group having 1-10 carbon atoms or a substituted or unsubstituted aromatic hydrocarbon group having 6-10 carbon atoms; X represents a heterocyclic ring-substituted alkyl group, the alkyl group having 1-6 carbon atoms and being substituted on a carbon atom of a heterocyclic ring having at least one of nitrogen atom, oxygen atom and sulfur atom, or

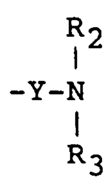

in which Y represents a straight or branched alkylene group having 1-10 carbon atoms, $R_2$ and $R_3$ independently of one another represent a substituted or unsubstituted and saturated or unsaturated aliphatic hydrocarbon group having 1-20 carbon atoms or a substituted or unsubstituted aromatic hydrocarbon group having 6-20 carbon atoms, or both $R_2$ and $R_3$ are taken together with the adjacent nitrogen atom to form a heterocyclic ring having at least one nitrogen atom, and optionally an oxygen or sulfur atom; or $R_1$ is taken together with the adjacent nitrogen atom and the

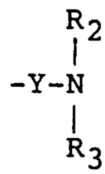

to form a heterocyclic ring having at least two nitrogen atoms; m is a number of 0-3 with the proviso that m is a number of 1-3 when $R_1$ is an unsubstituted aliphatic hydrocarbon group; n is a number of 1-4; and a total of m and n is 1-5.

The present invention also provides a pigment composition comprising an organic pigment and the pigment compound of the formula (I).

As the organic pigment residue represented by D in the formula (I), there may be exemplifed dioxazine, dianthraquinonyl, anthrapyrimidine, flavanthrone, anthanthrone, indanthrone, pyranthrone, violanthrone, isoviolanthrone, quinacridone, quinophthalone, diketopyrrolopyrrole, isoindolinone, perinone, perylene and thioindigo pigments.

D is preferably the following pigment residues,

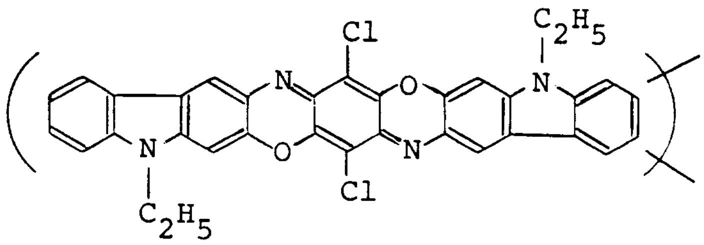

,

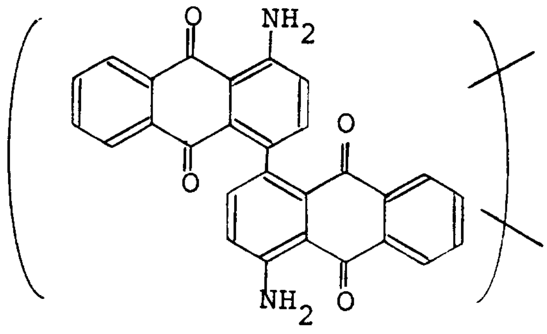

,

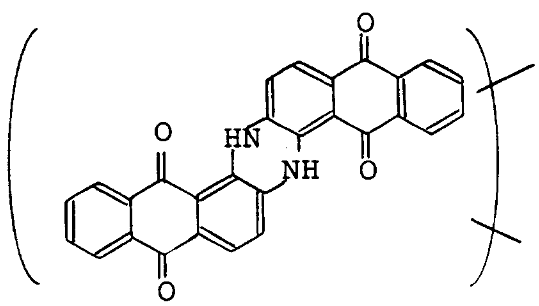

,

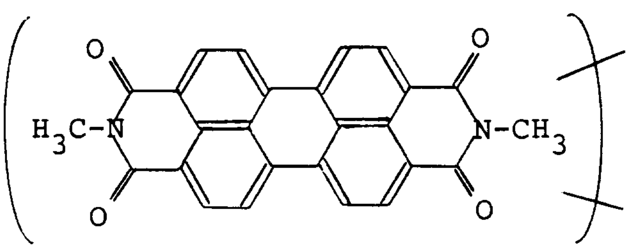

,

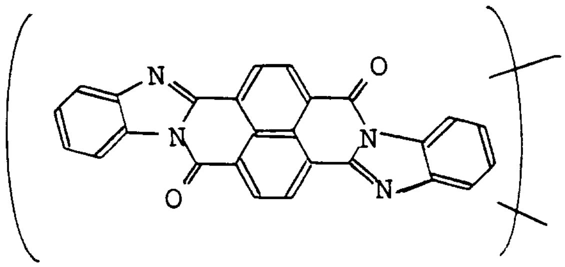

, or

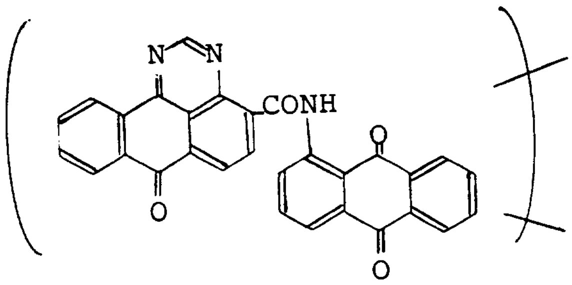

.

More preferably, D is

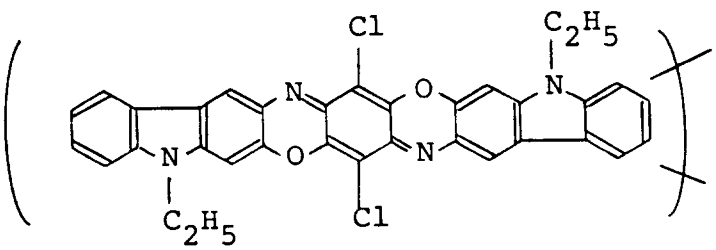

, or

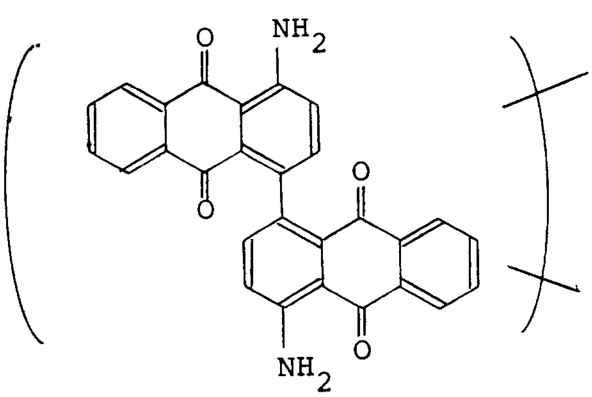

.

The aliphatic hydrocarbon groups represented by $R_1$ include, for example, substituted or unsubstituted alkyl, alkenyl and alkynyl groups and preferred are substituted or unsubstituted alkyl groups of 1-6 carbon atoms. The aromatic hydrocarbon groups include, for example, substituted or unsubstituted phenyl and naphthyl groups.

The substituents in $R_1$ include, for exmaple, an amino group which is substituted or unsubstituted with an alkyl or hydroxyalkyl group of 1-6 carbon atoms and an alkoxy group which is substituted or unsubstituted with a hydroxy group or an alkoxy group of 1-6 carbon atoms.

The heterocyclic ring formed by $R_1$ taken together with the adjacent nitrogen atom and

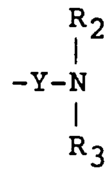

can be represented by the following formula:

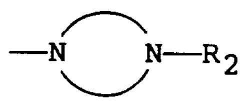

wherein $R_2$ is as defined above. Preferred are 5- or 6-membered heterocyclic rings which may additionally contain a nitrogen atom. Examples of such heterocyclic ring residues are those which are represented by the following formulas:

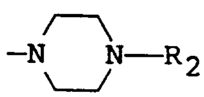 , 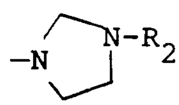 , 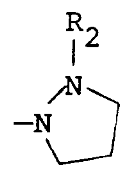

wherein $R_2$ is as defined above.

Examples of the aliphatic hydrocarbon groups represented by $R_2$ and $R_3$ independently of one another are substituted or unsubstituted alkyl, alkenyl and alkynyl groups of 1-20 carbon atoms. Preferred are substituted or unsubstituted alkyl groups of 1-6 carbon atoms. Examples of the aromatic hydrocarbon groups are substituted or unsubstituted phenyl and naphthyl groups. As substituents in these hydrocarbon groups, mention may be made of those which are referred to for $R_1$ hereabove.

The heterocyclic rings formed by $R_2$ and $R_3$ taken together with the adjacent nitrogen atom include, for example, those which are represented by the following formulas:

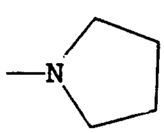 , 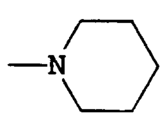 , 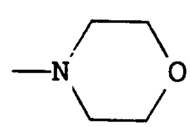 , 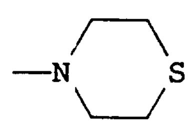 ,

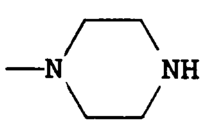 , 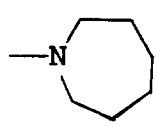

The heterocyclic rings in the heterocyclic ring-substituted alkyl group represented by X include, for example, those which are represented by the following formulas:

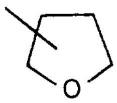, 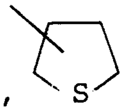, 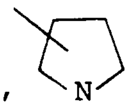, 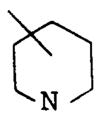, 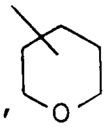, 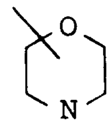, 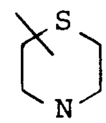,

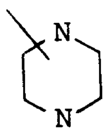 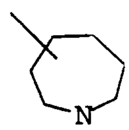

The above heterocyclic rings may be substituted e.g. with a lower alkyl group of 1-4 carbon atoms.

The pigment compounds represented by the formula (I) are prepared by the process known per se. For example, they can be prepared by reacting an organic pigment selected from dioxazine, dianthraquinonyl, anthrapyrimidine, flavanthrone, anthanthrone, indanthrone, pyranthrone, violanthrone, isoviolanthrone, quinacridone, quinophthalone, diketopyrrolopyrrole, isoindolinone, perinone, perylene and thioindigo pigments with chlorosulfonic acid and then reacting the reaction product with an amine represented by the following formula:

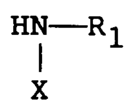 or 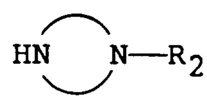

wherein $R_1$, $R_2$ and X are as defined above.

The reaction of the pigment with chlorosulfonic acid can be carried out, for example, by reacting the pigment with chlorosulfonic acid in an amount of 1-10 mols per 1 mol of the pigment at a temperature of -10 to 150 °C, if necessary, using an organic solvent. If necessary, halogenating agents such as thionyl chloride, phosphorus oxychloride and phosphorus pentachloride may also be added. The numbers n and m in the formula (I) and the total of them can be optionally chosen depending on the amount of chlorosulfonic acid and the reaction temperature. The reaction of the resulting reaction product with amine can be carried out, for example, by reacting the reaction product with the amine or a salt thereof in water or an organic solvent at a temperature of 0-150 °C.

The amines represented by the formula

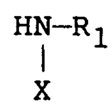

include, for example, N,N-dimethyl-N'-ethylethylenediamine, N,N-diethyl-N'-methylethylenediamine, N,N,N'-triethylethylenediamine, N,N'-diethyl-N-stearylethylenediamine, N'-benzyl-N,N-dimethylethylenediamine, N,N-diethyl-N'-methyl-1,3-propanediamine, N,N-diethyl-N'-ethoxyethyl-1,3-propanediamine, bis(N,N-diethylaminoethyl)amine, bis(N,N-dimethylaminopropyl)amine, N,N-diethyl-N'-diethylaminoethyl-1,3-propanediamine, N,N-dibutyl-N'-diethylaminoethyl-1,3-propanediamine, N,N'-diethyl-2-aminomethylpyrrolidine and N,N'-diethyl-2-aminomethylpiperidine.

The heterocyclic amines represented by the formula:

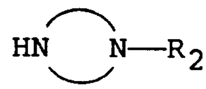

include, for example, N-methylpiperazine, N-ethylpiperazine, N-butylpiperazine, N-hydroxyethylpiperazine, N,N-diethylpiperazinethaneamine, N,N-dibutylpiperazinethaneamine and N-benzylpiperazine.

The above amines may be prepared by known processes, for example, by reacting an amine represented by $H_2N$-X or piperazine with an alkylating agent such as butyl p-toluenesulfonate, monochlorotriethylamine, a substituted or unsubstituted alkyl halide such as benzyl chloride, sulfate ester, benzenesulfonate ester, p-toluenesulfonate ester or phosphate ester.

The sulfonic acid group in the formula (I) may be in the form of a free acid or a salt with a mono-, di- or trivalent metal or an organic amine.

Examples of the mono-trivalent metals are sodium, potassium, magnesium, calcium, strontium, barium or aluminum.

Examples of the organic amines are the above-mentioned amines used for preparation of the pigment compounds, and besides, aliphatic amines such as ethylamine, propylamine, amylamine, hexylamine, octylamine, dodecylamine, stearylamine, diethylamine, dibutylamine and triethylamine, heterocyclic amines such as pyrrolidine, pipecoline, piperidine, piperazine and morpholine, and aromatic amines such as aniline and toluidine.

The metal or organic amine salts of the pigment compounds can be easily obtained by known processes, for example, by mixing an aqueous suspension of the compound with an aqueous solution or suspension of a chloride of the metal or organic amine.

The pigment composition of the present invention can be prepared by incorporating the pigment compounds into organic pigments by a method known per se.

Examples of the organic pigments are dioxazine, dianthraquinonyl, anthrapyrimidine, flavanthrone, anthanthrone, indanthrone, pyranthrone, violanthrone, isoviolanthrone, phthalocyanine, quinacridone, quinophthalone, diketopyrrolopyrrole, isoindolinone, perinone, perylene and thioindigo pigments. An organic pigment of the same kind as the pigment compound, is preferred.

Amount of the pigment compound is preferably 0.5-30% by weight, more preferably 1-20% by weight based on the organic pigment.

Incorporation of the pigment compound into the organic pigment can be effected, for example, by merely mixing dry powders or press cakes of them, by mechanically mixing them by various grinders such as kneader, beads mill and attritor, by suspending the pigment in water or an organic solvent and adding to the suspension the pigment compound in the form of dry powders or in the form of a suspension in water or an organic solvent to deposit the pigment compound on the surface of the pigment, or by dissolving the pigment and the pigment compound in a solvent having strong dissolving power such as sulfuric acid and coprecipitating them with a poor solvent such as water.

The pigment composition obtained in accordance with the present invention can be used with excellent pigment characteristics for various uses such as coating compositions, printing inks, coloration of plastics and printing of fibrous materials. Especially, when they are used for coating compositions and printing inks in the form of non-aqueous dispersion system, dispersion viscosity decreases to show superior flowability as compared with the case of using an organic pigment alone. Besides, there occurs no color segregation and coloring power is high and the resulting prints or coats are satisfactory in gloss and high in transparency.

The present invention is explained in more detail by the following examples. It should be understood that they are exemplary only, and should not be construed as limiting the invention in any manner. All parts and % are by weight. The pigment compounds in the examples are shown as free acids.

Example 1

40 parts of crude C.I. Pigment Violet 23 was added to 320 parts of chlorosulfonic acid, followed by heating at 60 °C for 3 hours. The reaction product was poured into 3000 parts of ice water. The resulting suspension was filtrated and washed with water to obtain 240 parts of a filter cake. This filter cake of the reaction product was added to 1000 parts of ice water to prepare a slurry. To the slurry was added 35 parts of N,N-diethyl-N'-methylethylenediamine, followed by stirring at room temperature for 3 hours and then subjecting to filtration, washing with water and drying to obtain a pigment compound having the following

formula.

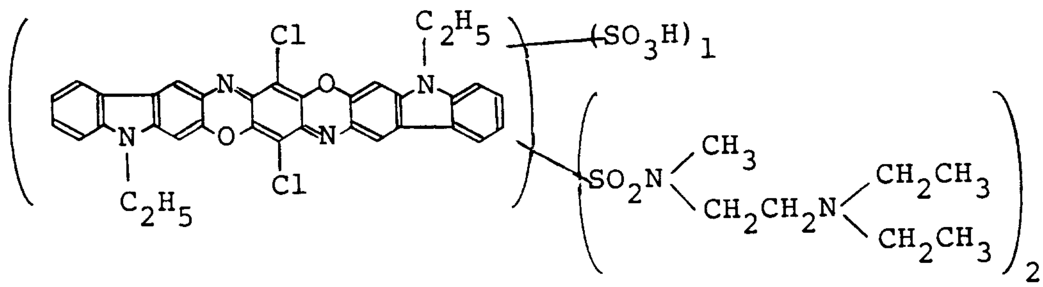

| Elemental analysis ($C_{48}H_{54}Cl_2N_8O_9S_3$): | | | | | |
|---|---|---|---|---|---|
| | C | H | N | S | Cl |
| Found: | 55.0 | 5.7 | 10.9 | 8.7 | 6.6 |
| Calculated: | 54.7 | 5.2 | 10.6 | 9.1 | 6.7 |

10 parts of the resulting pigment compound was mixed with 90 parts of C.I. Pigment Violet 23 to obtain 100 parts of a pigment composition.

Examples 2 and 3

The pigment compound obtained in Example 1 was mixed with C.I. Pigment Violet 23 at the ratios as shown in Table 1 to obtain pigment compositions.

Table 1

| | Pigment compounds | C.I. Pigment Violet 23 |
|---|---|---|
| Example 2 | 3 parts | 97 parts |
| Example 3 | 15 parts | 85 parts |

Example 4

To 1000 parts of ice water was added 240 parts of the same filter cake of the reaction product of Violet 23 with chlorosulfonic acid as obtained in Example 1 to prepare a slurry. To the slurry was added 71 parts of N,N-diethyl-N'-methylethylenediamine, followed by stirring at room temperature for 3 hours and then subjecting to filtration, washing with water and drying to obtain a pigment compound having the following formula.

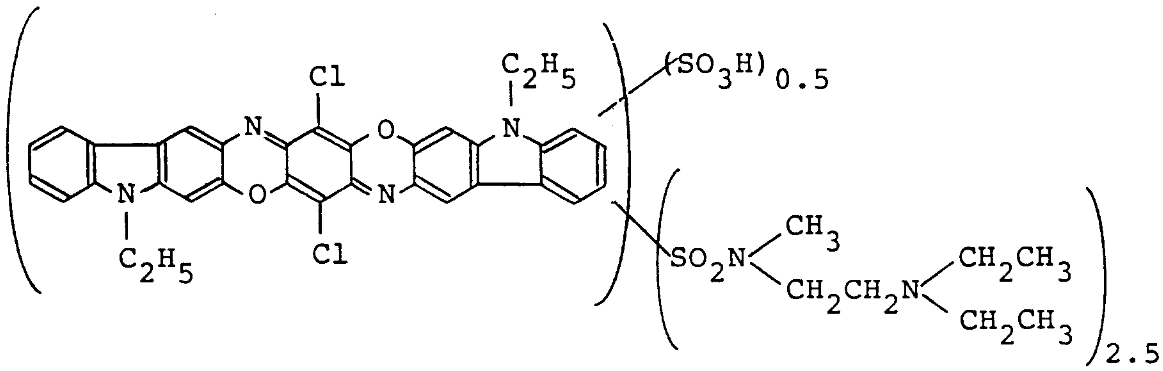

10 parts of the resulting pigment compound was mixed with 90 parts of C.I. Pigment Violet 23 to obtain 100 parts of a pigment composition.

Examples 5 and 6

The pigment compound obtained in Example 1 was mixed with C.I. Pigment Violet 23 at the ratios as shown in Table 1 to obtain pigment compositions.

Table 2

| | Pigment compounds | C.I. Pigment Violet 23 |
|---|---|---|
| Example 5 | 3 parts | 97 parts |
| Example 6 | 15 parts | 85 parts |

Example 7

To 1000 parts of ice water was added 240 parts of the same filter cake of the reaction product of Violet 23 with chlorosulfonic acid as obtained in Example 1 to prepare a slurry. To the slurry was added 55 parts of N,N-diethyl-N'-ethoxyethyl-1,3-propanediamine, followed by stirring at room temperature for 3 hours and then subjecting to filtration, washing with water and drying to obtain a pigment compound having the following formula.

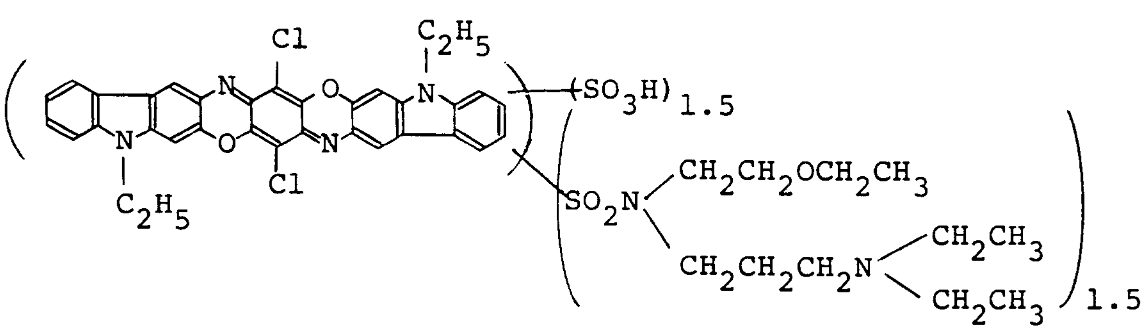

10 parts of the resulting pigment compound was mixed with 90 parts of C.I. Pigment Violet 23 to obtain 100 parts of a pigment composition.

Example 8

To 1000 parts of ice water was added 240 parts of the same filter cake of the reaction product of Violet 23 with chlorosulfonic acid as obtained in Example 1 to prepare a slurry. To the slurry was added 77 parts of N,N-dibutyl-N'-diethylaminoethyl-1,3-propanediamine, followed by stirring at room temperature for 3 hours and then subjecting to filtration, washing with water and drying to obtain a pigment compound having the following formula.

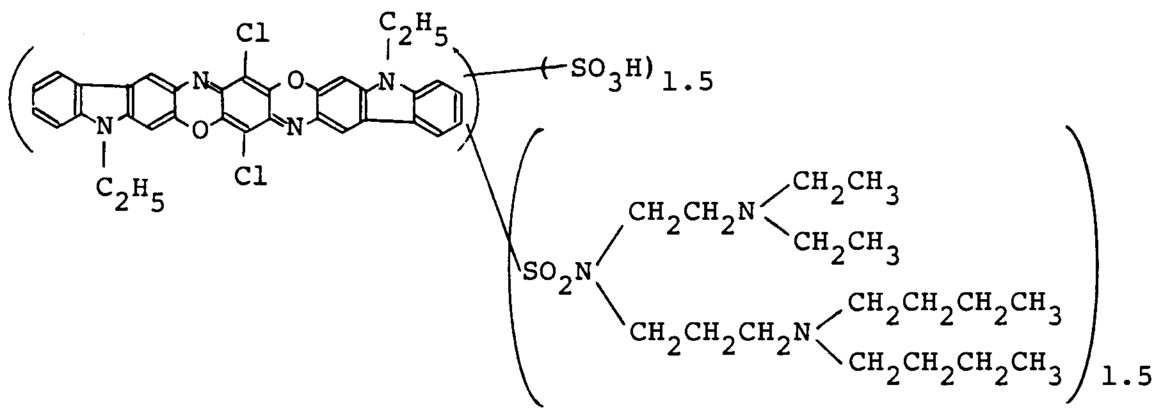

10 parts of the resulting pigment compound was mixed with 90 parts of C.I. Pigment Violet 23 to obtain 100 parts of a pigment composition.

Example 9

To 1000 parts of ice water was added 240 parts of the same filter cake of the reaction product of Violet 23 with chlorosulfonic acid as obtained in Example 1 to prepare a slurry. To the slurry was added 66 parts of N,N-dibutylpiperazinethaneamine, followed by stirring at room temperature for 3 hours and then subjecting to filtration, washing with water and drying to obtain a pigment compound having the following formula.

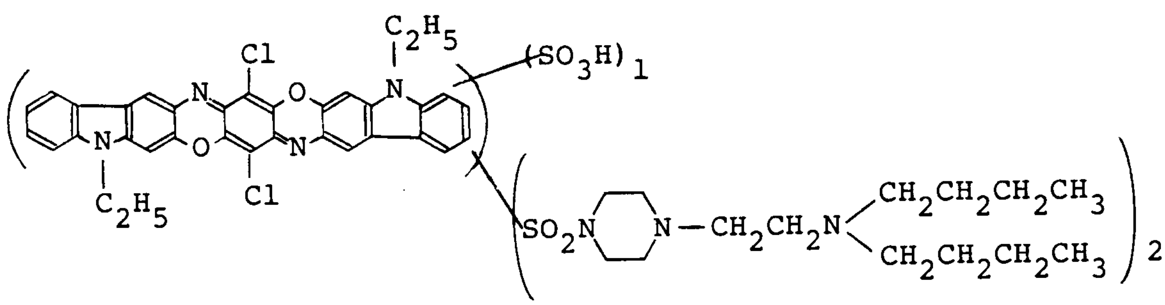

10 parts of the resulting pigment compound was mixed with 90 parts of C.I. Pigment Violet 23 to obtain 100 parts of a pigment composition.

Example 10

40 parts of crude C.I. Pigment Violet 23 was added to 320 parts of chlorosulfonic acid, followed by stirring at 0 ° C for 3 hours. The reaction product was poured into 3000 parts of ice water. The resulting suspension was filtrated and washed with water to obtain 220 parts of a filter cake.

This filter cake of the reaction product was added to 1000 parts of ice water to prepare a slurry. To the slurry was added 62 parts of N-ethylpiperazine, followed by stirring at room temperature for 3 hours and subjecting to filtration, washing with water and drying to obtain a pigment compound having the following formula.

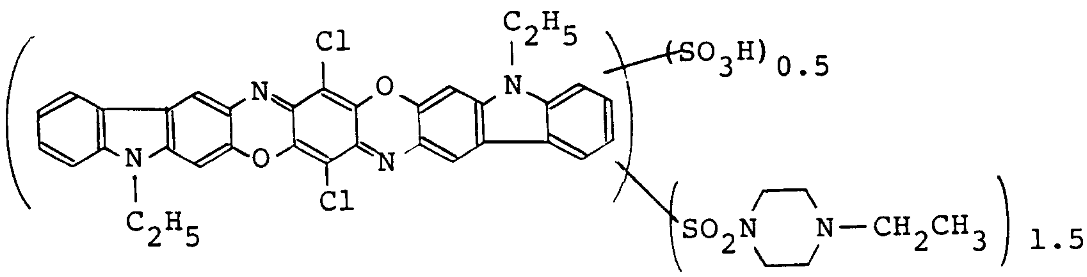

10 parts of the resulting pigment compound was mixed with 90 parts of C.I. Pigment Violet 23 to obtain 100 parts of a pigment composition.

Examples 11 and 12

The pigment compound obtained in Example 10 was mixed with the organic pigments shown in Table 3 to obtain pigment compositions.

Table 3

| | Organic pigments | | Pigment compounds |
|---|---|---|---|
| Example 11 | C.I. Pigment Blue 15 | 85 parts | 15 parts |
| Example 12 | C.I. Pigment Blue 60 | 90 parts | 10 parts |

Example 13

To 1000 parts of ice water was added 220 parts of the same filter cake of the reaction product of Violet 23 with chlorosulfonic acid as obtained in Example 11 to prepare a slurry. To the slurry was added 32 parts of N,N'-diethyl-2-aminomethylpyrrolidine, followed by stirring at room temperature for 3 hours and then subjecting to filtration, washing with water and drying to obtain a pigment compound having the following formula.

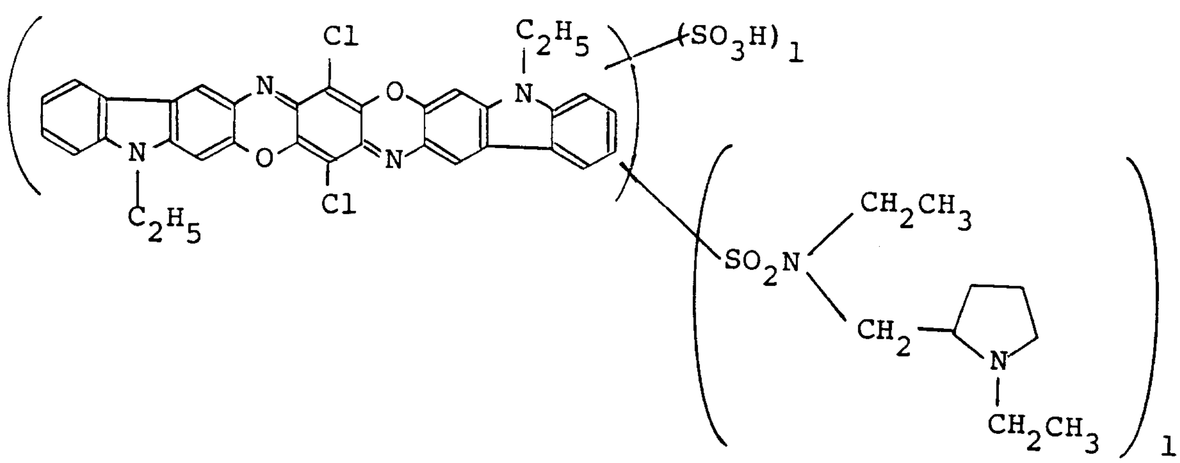

10 parts of the resulting pigment compound was mixed with 90 parts of C.I. Pigment Violet 23 to obtain 100 parts of a pigment composition.

Example 14

30 parts of crude C.I. Pigment Red 177 was added to 240 parts of chlorosulfonic acid, followed by heating at 90 °C for 3 hours. The reaction product was poured into 2000 parts of ice water. The resulting suspension was filtrated and washed with water to obtain 160 parts of a filter cake.

This filter cake of the reaction product was added to 1000 parts of ice water to prepare a slurry. To the slurry was added 39 parts of N,N,N'-triethylethylenediamine, followed by stirring at room temperature for 3 hours and then subjecting to filtration, washing with water and drying to obtain a pigment compound having the following formula.

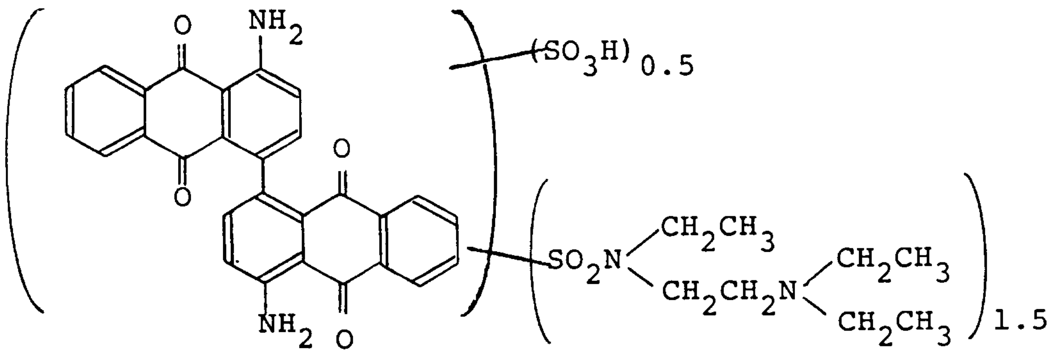

5 parts of the resulting pigment compound was mixed with 95 parts of C.I. Pigment Red 177 to obtain 100 parts of a pigment composition.

Examples 15 and 16

The pigment compound obtained in Example 14 was mixed with C.I. Pigment Red 177 at the ratios as shown in Table 4 to obtain pigment compositions.

Table 4

| | Pigment compounds | C.I. Pigment Red 177 |
|---|---|---|
| Example 15 | 3 parts | 97 parts |
| Example 16 | 10 parts | 90 parts |

Example 17

To 1000 parts of ice water was added 160 parts of the same filter cake of the reaction product of Red 177 with chlorosulfonic acid as obtained in Example 14 to prepare a slurry. To the slurry was added 29 parts of N,N,N'-triethylethylenediamine, followed by stirring at room temperature for 3 hours and then subjecting to filtration, washing with water and drying to obtain a pigment compound having the following formula.

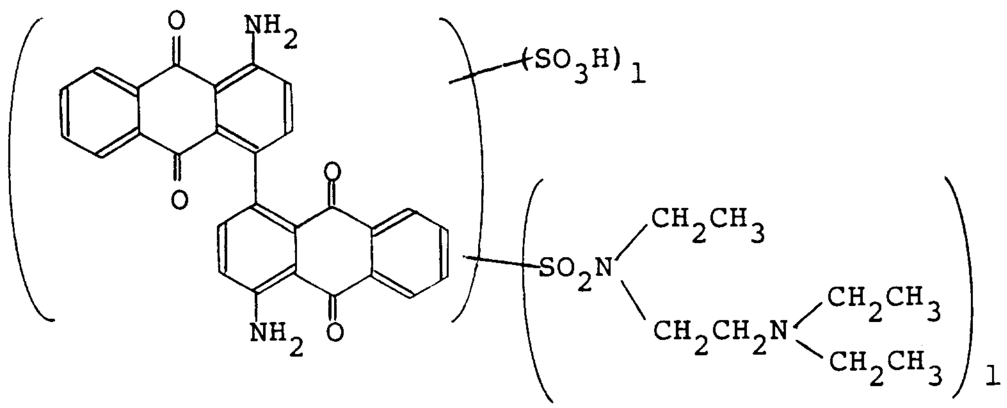

5 parts of the resulting pigment compound was mixed with 95 parts of C.I. Pigment Red 177 to obtain 100 parts of a pigment composition.

Examples 18 and 19

The pigment compound obtained in Example 17 was mixed with C.I. Pigment Red 177 at the ratios as shown in Table 5 to obtain pigment compositions.

Table 5

| | Pigment compounds | C.I. Pigment Red 177 |
|---|---|---|
| Example 18 | 3 parts | 97 parts |
| Example 19 | 10 parts | 90 parts |

Example 20

To 1000 parts of ice water was added 160 parts of the same filter cake of the reaction product of Red 177 with chlorosulfonic acid as obtained in Example 14 to prepare a slurry. To the slurry was added 68 parts of N,N-diethyl-N'-ethoxyethyl-1,3-propanediamine, followed by stirring at room temperature for 3 hours and then subjecting to filtration, washing with water and drying to obtain a pigment compound having the following formula.

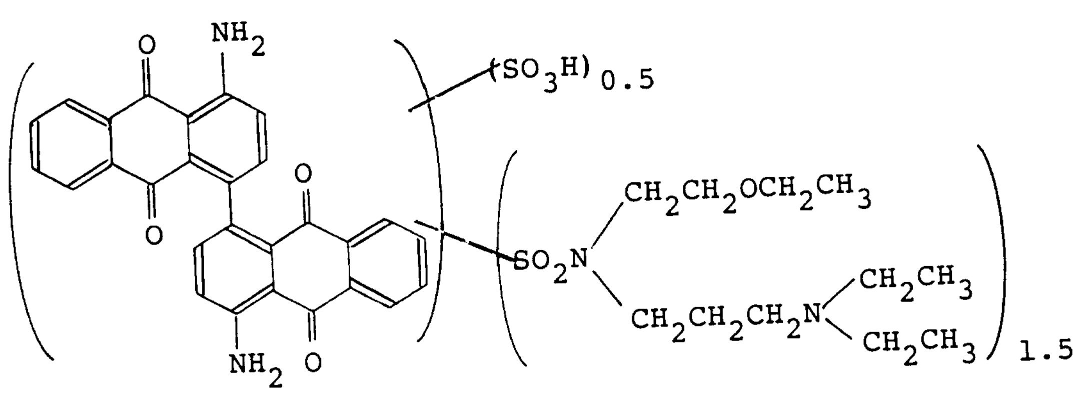

10 parts of the resulting pigment compound was mixed with 90 parts of C.I. Pigment Red 177 to obtain 100 parts of a pigment composition.

Example 21

To 1000 parts of ice water was added 160 parts of the same filter cake of the reaction product of Red 177 with chlorosulfonic acid as obtained in Example 14 to prepare a slurry. To the slurry was added 96 parts of N,N-dibutyl-N'-diethylaminoethyl-1,3-propanediamine, followed by stirring at room temperature for 3 hours and then subjecting to filtration, washing with water and drying to obtain a pigment compound having the following formula.

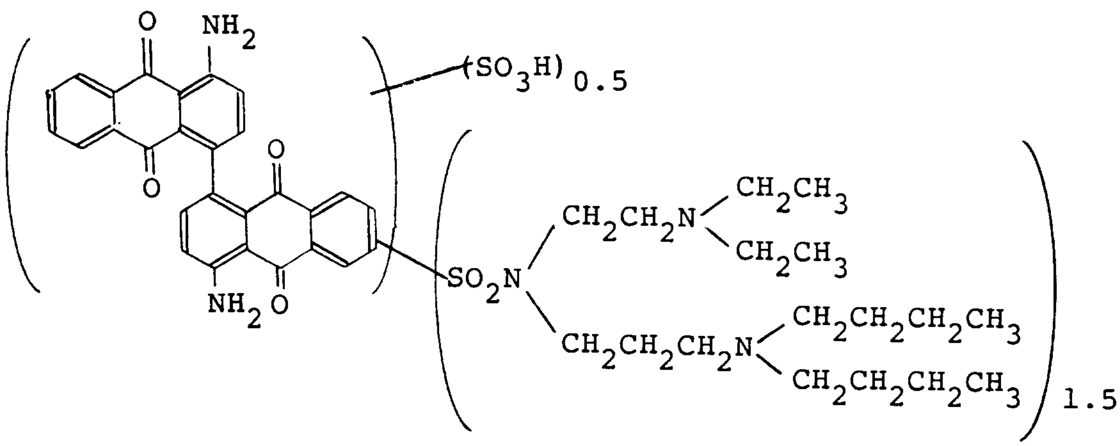

10 parts of the resulting pigment compound was mixed with 90 parts of C.I. Pigment Red 177 to obtain 100 parts of a pigment composition.

Example 22

To 1000 parts of ice water was added 160 parts of the same filter cake of the reaction product of Red 177 with chlorosulfonic acid as obtained in Example 14 to prepare a slurry. To the slurry was added 65 parts of N,N-dibutylpiperazinethaneamine, followed by stirring at room temperature for 3 hours and then subjecting to filtration, washing with water and drying to obtain a pigment compound having the following formula.

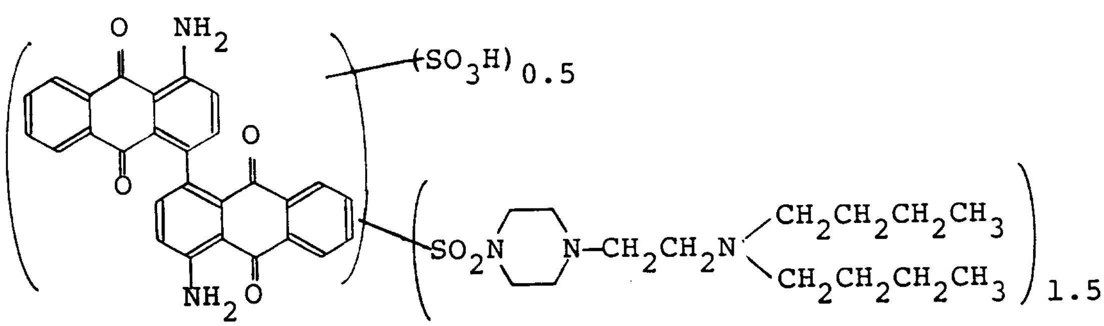

5 parts of the resulting pigment compound was mixed with 95 parts of C.I. Pigment Red 177 to obtain 100 parts of a pigment composition.

Examples 23 and 24

The pigment compound obtained in Example 22 was mixed with the organic pigments shown in Table 6 to obtain pigment compositions.

Table 6

| | Organic pigments | | Pigment compounds |
|---|---|---|---|
| Example 23 | C.I. Pigment Red 179 | 85 parts | 15 parts |
| Example 24 | C.I. Pigment Violet 19 | 90 parts | 10 parts |

Example 25

To 1000 parts of ice water was added 160 parts of the same filter cake of the reaction product of Red 177 with chlorosulfonic acid as obtained in Example 14 to prepare a slurry. To the slurry was added 32 parts of N,N'-diethyl-2-aminomethylpyrrolidine, followed by stirring at room temperature for 3 hours and then subjecting to filtration, washing with water and drying to obtain a pigment compound having the following formula.

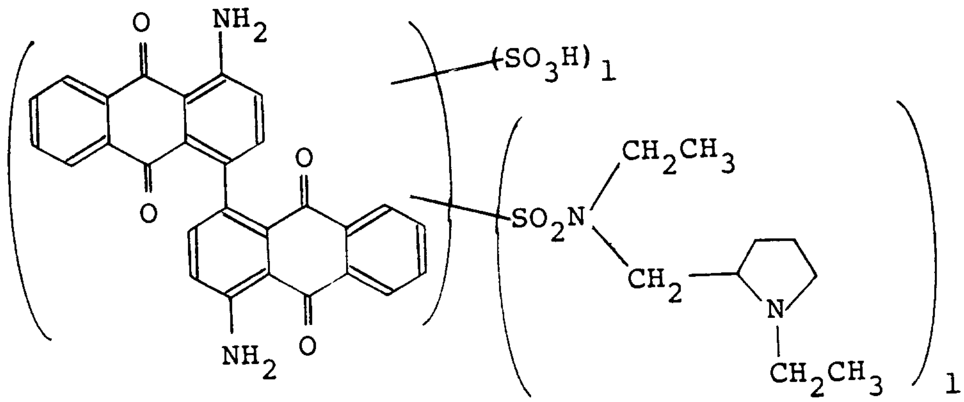

15 parts of the resulting pigment compound was mixed with 85 parts of C.I. Pigment Red 177 to obtain 100 parts of a pigment composition.

Example 26

30 parts of crude C.I. Pigment Blue 60 was added to 240 parts of chlorosulfonic acid, followed by heating at 90°C for 3 hours. The reaction product was poured into 2000 parts of ice water. The resulting suspension was filtrated and washed with water to obtain 180 parts of a filter cake. This filter cake of the reaction product was added to 1000 parts of ice water to prepare a slurry. To the slurry was added 29 parts of N,N,N'-triethylethylenediamine, followed by stirring at room temperature for 3 hours and then subjecting to filtration, washing with water and drying to obtain a pigment compound having the following formula.

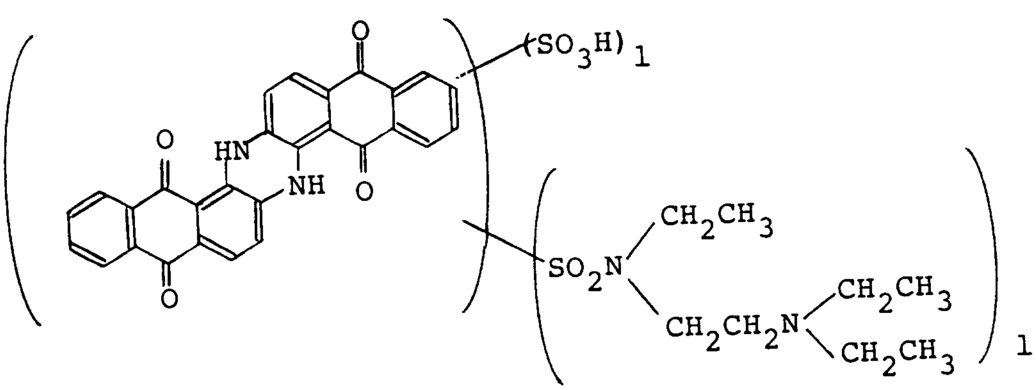

5 parts of the resulting pigment compound was mixed with 95 parts of C.I. Pigment Blue 60 to obtain 100 parts of a pigment composition.

Examples 27 and 28

The pigment compound obtained in Example 26 was mixed with 60 parts of C.I. Pigment Blue 60 at the ratios shown in Table 7 to obtain pigment compositions.

Table 7

| | Pigment compounds | C.I. Pigment Blue 60 |
|---|---|---|
| Example 27 | 3 parts | 97 parts |
| Example 28 | 10 parts | 90 parts |

Example 29

To 1000 parts of ice water was added 180 parts of the same filter cake of the reaction product of Blue 60 with chlorosulfonic acid as obtained in Example 26 to prepare a slurry. To the slurry was added 41 parts of N,N-diethyl-N'-ethoxyethyl-1,3-propanediamine, followed by stirring at room temperature for 3 hours and then subjecting to filtration, washing with water and drying to obtain a pigment compound having the following formula.

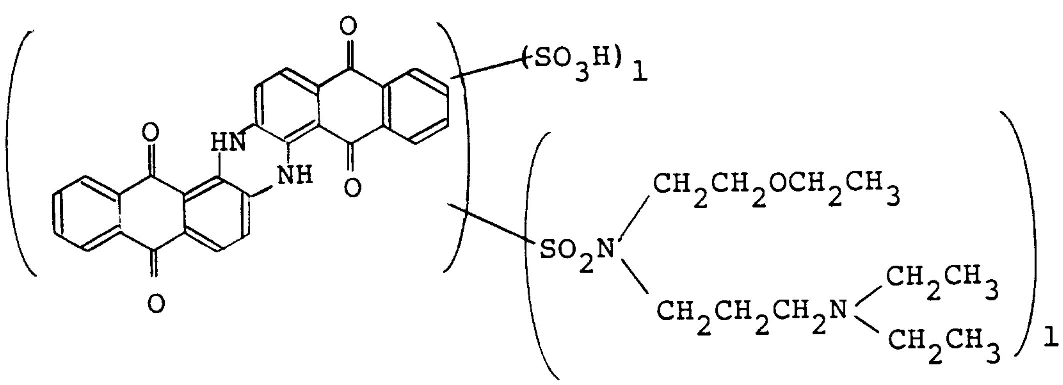

10 parts of the resulting pigment compound was mixed with 90 parts of C.I. Pigment Blue 60 to obtain 100 parts of a pigment composition.

Example 30

To 1000 parts of ice water was added 180 parts of the same filter cake of the reaction product of Blue 60 with chlorosulfonic acid as obtained in Example 26 to prepare a slurry. To the slurry was added 96 parts of N,N-dibutyl-N'-diethylaminoethyl-1,3-propanediamine, followed by stirring at room temperature for 3 hours and then subjecting to filtration, washing with water and drying to obtain a pigment compound having the following formula.

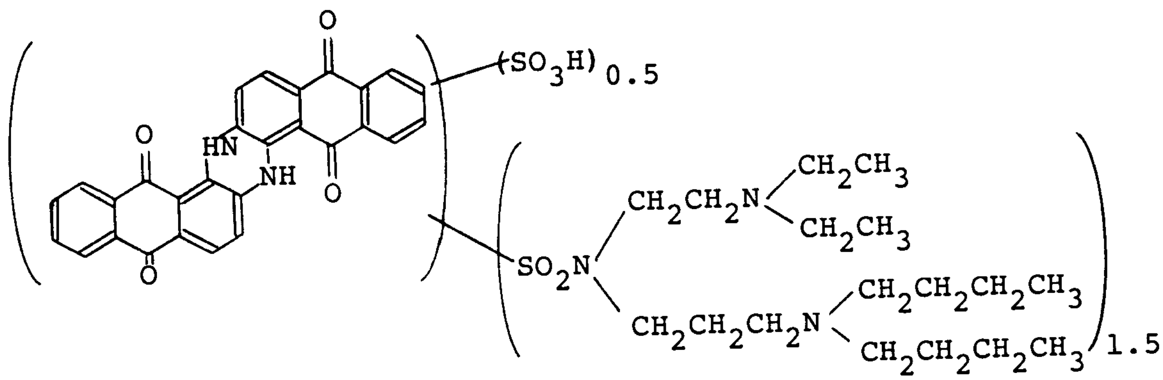

10 parts of the resulting pigment compound was mixed with 90 parts of C.I. Pigment Blue 60 to obtain 100 parts of a pigment composition.

Example 31

To 1000 parts of ice water was added 180 parts of the same filter cake of the reaction product of Blue 60 with chlorosulfonic acid as obtained in Example 26 to prepare a slurry. To the slurry was added 27 parts of N-methylpiperazine, followed by stirring at room temperature for 3 hours and then subjecting to filtration, washing with water and drying to obtain a pigment compound having the following formula.

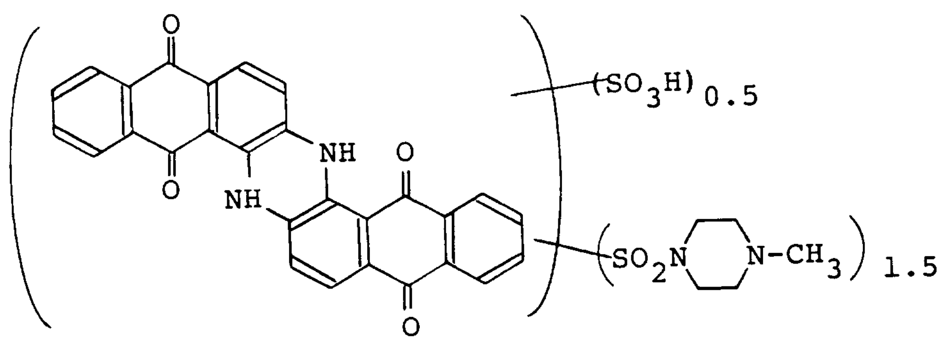

10 parts of the resulting pigment compound was mixed with 90 parts of C.I. Pigment Blue 60 to obtain 100 parts of a pigment composition.

Example 32

To 1000 parts of ice water was added 180 parts of the same filter cake of the reaction product of Blue 60 with chlorosulfonic acid as obtained in Example 26 to prepare a slurry. To the slurry was added 65 parts of N,N-dibutylpiperazinethaneamine, followed by stirring at room temperature for 3 hours and then subjecting to filtration, washing with water and drying to obtain a pigment compound having the following formula.

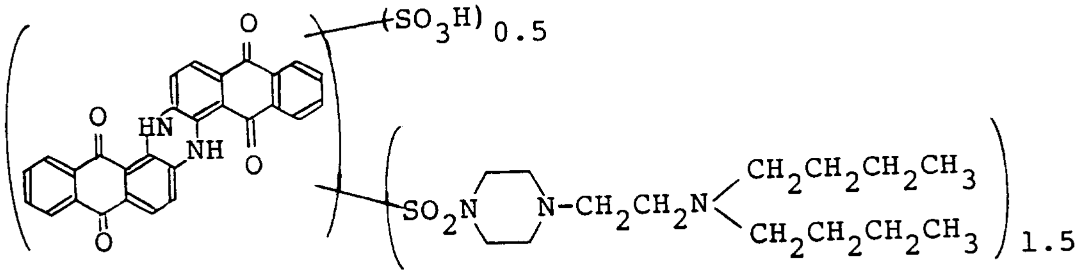

5 parts of the resulting pigment compound was mixed with 95 parts of C.I. Pigment Blue 60 to obtain 100 parts of a pigment composition.

Examples 33 and 34

The pigment compound obtained in Example 33 was mixed with organic pigments shown in Table 8 to obtain pigment compositions.

Table 8

| | Organic pigments | | Pigment compounds |
|---|---|---|---|
| Example 33 | C.I. Pigment Blue 15 | 85 parts | 15 parts |
| Example 34 | C.I. Pigment Violet 23 | 90 parts | 10 parts |

Example 35

30 parts of crude C.I. Pigment Red 179 was added to 240 parts of chlorosulfonic acid, followed by heating at 90°C for 3 hours. The reaction product was poured into 2000 parts of ice water. The resulting suspension was filtrated and washed with water to obtain 180 parts of a filter cake.

This filter cake of the reaction product was added to 1000 parts of ice water to prepare a slurry. To the slurry was added 83 parts of N,N,N'-triethylethylenediamine, followed by stirring at room temperature for 3 hours and then subjecting to filtration, washing with water and drying to obtain a pigment compound having the following formula.

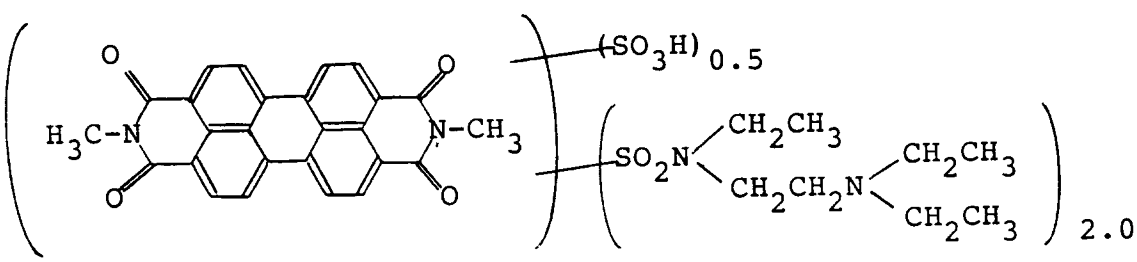

10 parts of the resulting pigment compound was mixed with 90 parts of C.I. Pigment Red 179 to obtain 100 parts of a pigment composition.

Example 36

To 1000 parts of ice water was added 180 parts of the same filter cake of the reaction product of Red 179 with chlorosulfonic acid as obtained in Example 35 to prepare a slurry. To the slurry was added 41 parts of N,N,N'-triethylethylenediamine, followed by stirring at room temperature for 3 hours and then subjecting to filtration, washing with water and drying to obtain a pigment compound having the following formula.

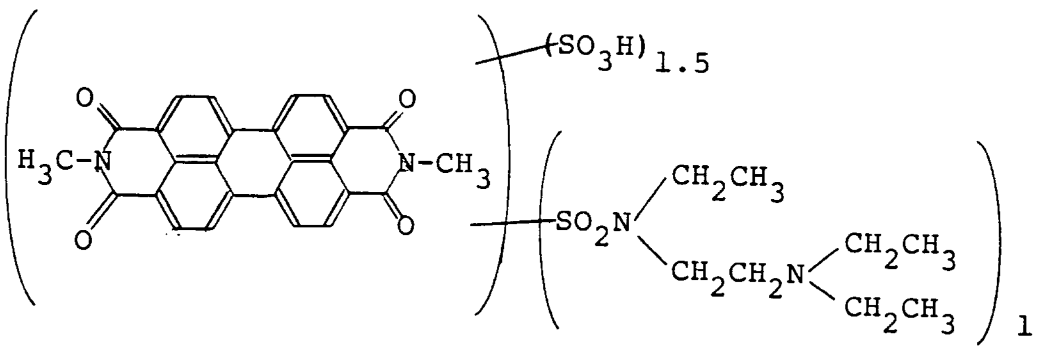

10 parts of the resulting pigment compound was mixed with 90 parts of C.I. Pigment Red 179 to obtain 100 parts of a pigment composition.

Examples 37 and 38

The pigment compound obtained in Example 36 was mixed with C.I. Pigment Red 179 at the ratios shown in Table 9 to obtain pigment compositions.

Table 9

| | Pigment compounds | C.I. Pigment Red 179 |
|---|---|---|
| Example 37 | 3 parts | 97 parts |
| Example 38 | 15 parts | 85 parts |

Example 39

To 1000 parts of ice water was added 180 parts of the same filter cake of the reaction product of Red 179 with chlorosulfonic acid as obtained in Example 35 to prepare a slurry. To the slurry was added 33 parts of N-ethylpiperazine, followed by stirring at room temperature for 3 hours and then subjecting to filtration, washing with water and drying to obtain a pigment compound having the following formula.

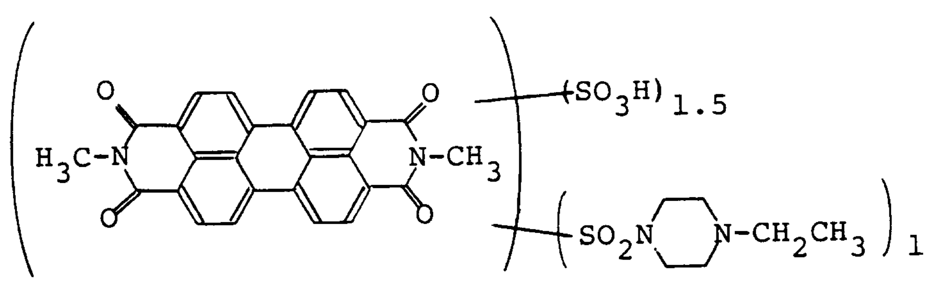

10 parts of the resulting pigment compound was mixed with 90 parts of C.I. Pigment Red 179 to obtain 100 parts of a pigment composition.

Example 40

30 parts of crude C.I. Pigment Orange 43 was added to 240 parts of chlorosulfonic acid, followed by heating at 90 °C for 3 hours. The reaction product was poured into 2000 parts of ice water. The resulting suspension was filtrated and washed with water to obtain 170 parts of a filter cake.

This filter cake of the reaction product was added to 1000 parts of ice water to prepare a slurry. To the slurry was added 42 parts of N,N,N'-triethylethylenediamine, followed by stirring at room temperature for 3 hours and then subjecting to filtration, washing with water and drying to obtain a pigment compound having the following formula.

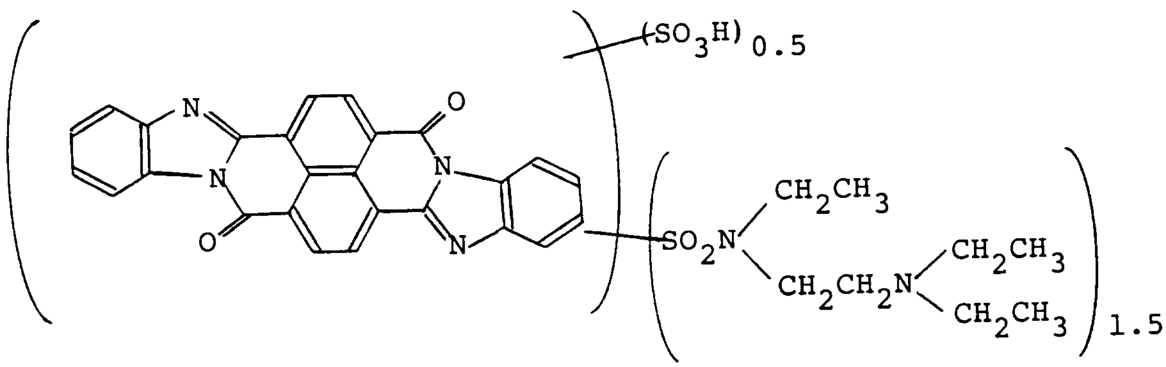

10 parts of the resulting pigment compound was mixed with 90 parts of C.I. Pigment Orange 43 to obtain 100 parts of a pigment composition.

Example 41

To 1000 parts of ice water was added 170 parts of the same filter cake of the reaction product of Orange 43 with chlorosulfonic acid as obtained in Example 40 to prepare a slurry. To the slurry was added 62 parts of N,N-dibutyl-N'-diethylaminoethyl-1,3-propanediamine, followed by stirring at room temperature for 3 hours and then subjecting to filtration, washing with water and drying to obtain a pigment compound having the following formula.

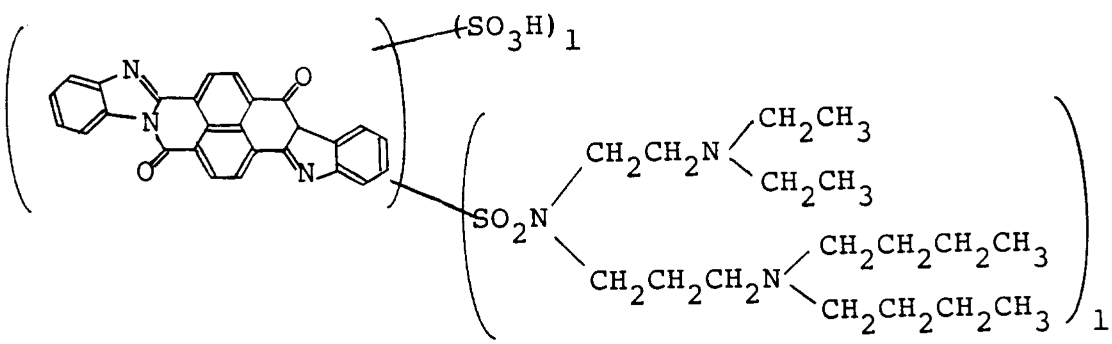

10 parts of the resulting pigment compound was mixed with 90 parts of C.I. Pigment Orange 43 to obtain 100 parts of a pigment composition.

Example 42

30 parts of crude C.I. Pigment Yellow 108 was added to 240 parts of chlorosulfonic acid, followed by heating at 90 °C for 3 hours. The reaction product was poured into 2000 parts of ice water. The resulting suspension was filtrated and washed with water to obtain 170 parts of a filter cake. This filter cake of the reaction product was added to 1000 parts of ice water to prepare a slurry. To the slurry was added 30 parts of N,N'-diethyl-2-aminomethylpyrrolidine, followed by stirring at room temperature for 3 hours and then subjecting to filtration, washing with water and drying to obtain a pigment compound having the following formula.

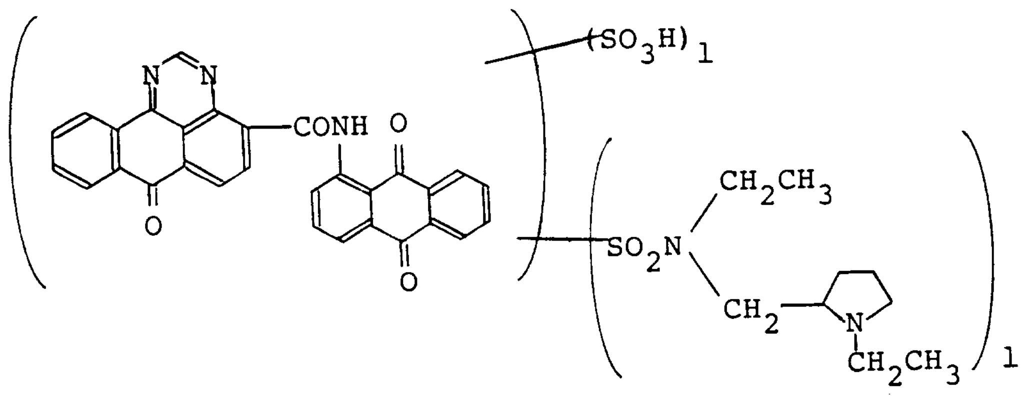

10 parts of the resulting pigment compound was mixed with 90 parts of C.I. Pigment Yellow 108 to obtain 100 parts of a pigment composition.

Example 43

Primary color paints were prepared using aminoalkyd resin varnish for baking paints and a pigment alone or the pigment compositions obtained in Examples 1-42. Viscosity and gloss of the resulting paints were measured. Furthermore, the above primary color paint and a titanium oxide paint were mixed at a ratio of 1:10 to prepare light colour paints and properties thereof were evaluated.

Evaluations were conducted by the following methods and the results are shown in Tables 10-22.

Viscosity: Viscosity of the primary color paints was measured by Brookfield viscometer at 25 °C and 30 rpm.

Non-flocculation characteristics: Each of the light colour paints was coated on an art paper and dried for a short time. Then, a part of the coated surface was rubbed with a finger. Thereafter, the coat was baked and color density of the part which was rubbed with finger was compared with that of the part which was not rubbed. The result are evaluated by the following criteria.

◎ : No difference observed.
○ : Slight difference observed.
△ : Considerable difference observed.
x : Clear difference observed.

Coloring power: Each of the light colour paints was coated on an art paper and color density after baked was visually evaluated on the basis of the density (100) when not the pigment composition, but the pigment alone was used.

Gloss: Each of the primary color paints was coated on a glass plate and baked and the gloss at 60°-60° was measured.

Table 10 C.I. Pigment Violet 23

| | Amount of compound | Viscosity (30 rpm) | Non-flocculation property | Coloring power | Gloss (60°-60°) |
|---|---|---|---|---|---|
| Example 1 | 10% | 2.3P | ◎ | 144 | 99% |
| Example 2 | 3% | 2.7P | ◎ | 143 | 98% |
| Example 3 | 15% | 2.4P | ◎ | 144 | 99% |
| Example 7 | 10% | 2.7P | ◎ | 140 | 96% |
| Example 8 | 10% | 2.3P | ◎ | 145 | 98% |
| Example 9 | 10% | 2.2P | ◎ | 145 | 99% |
| Example 10 | 10% | 2.6P | ◎ | 143 | 98% |
| Example 13 | 10% | 2.4P | ◎ | 142 | 97% |
| Single pigment | 0% | 7.0P | x | 100 | 85% |

Table 11 C.I. Pigment Violet 23

| | Amount of compound | Viscosity (30 rpm) | Non-flocculation property | Coloring power | Gloss (60°-60°) |
|---|---|---|---|---|---|
| Example 4 | 10% | 2.5P | ◎ | 143 | 98% |
| Example 5 | 3% | 2.9P | ◎ | 142 | 97% |
| Example 6 | 15% | 2.6P | ◎ | 143 | 98% |
| Single pigment | 0% | 6.9P | x | 100 | 85% |

Table 12 C.I. Pigment Blue 15

| | Amount of compound | Viscosity (30 rpm) | Non-flocculation property | Coloring power | Gloss (60°-60°) |
|---|---|---|---|---|---|
| Example 11 | 15% | 2.9P | ◎ | 133 | 97% |
| Single pigment | 0% | 6.6P | x | 100 | 88% |

Tabble 13 C.I. Pigment Blue 60

| | Amount of compound | Viscosity (30 rpm) | Non-flocculation property | Coloring power | Gloss (60°-60°) |
|---|---|---|---|---|---|
| Example 12 | 10% | 1.9P | ◎ | 113 | 96% |
| Single pigment | 0% | 4.1P | x | 100 | 89% |

Table 14 C.I. Pigment Red 177

| | Amount of compound | Viscosity (30 rpm) | Non-flocculation property | Coloring power | Gloss (60°-60°) |
|---|---|---|---|---|---|
| Example 14 | 5% | 1.5P | ◎ | 114 | 98% |
| Example 15 | 3% | 1.6P | ◎ | 113 | 97% |
| Example 16 | 10% | 1.5P | ◎ | 114 | 98% |
| Example 17 | 5% | 1.4P | ◎ | 115 | 98% |
| Example 18 | 3% | 1.5P | ◎ | 114 | 97% |
| Example 19 | 10% | 1.4P | ◎ | 115 | 98% |
| Example 20 | 10% | 1.6P | ◎ | 112 | 96% |
| Example 21 | 10% | 1.3P | ◎ | 116 | 99% |
| Example 22 | 5% | 1.6P | ◎ | 113 | 97% |
| Example 25 | 15% | 1.3P | ◎ | 116 | 98% |
| Single pigment | 0% | 3.5P | x | 100 | 91% |

Table 15 C.I. Pigment Red 179

| | Amount of compound | Viscosity (30 rpm) | Non-flocculation property | Coloring power | Gloss (60°-60°) |
|---|---|---|---|---|---|
| Example 23 | 15% | 2.9P | ◎ | 120 | 94% |
| Single pigment | 0% | 4.3P | x | 100 | 81% |

Tabble 16 C.I. Pigment Violet 19

| | Amount of compound | Viscosity (30 rpm) | Non-flocculation property | Coloring power | Gloss (60°-60°) |
|---|---|---|---|---|---|
| Example 24 | 10% | 3.2P | ◎ | 127 | 95% |
| Single pigment | 0% | 6.5P | x | 100 | 86% |

Table 17 C.I. Pigment Blue 60

| | Amount of compound | Viscosity (30 rpm) | Non-flocculation property | Coloring power | Gloss (60°-60°) |
|---|---|---|---|---|---|
| Example 26 | 5% | 1.6P | ◎ | 116 | 99% |
| Example 27 | 3% | 1.7P | ◎ | 116 | 97% |
| Example 28 | 10% | 1.5P | ◎ | 118 | 99% |
| Example 29 | 10% | 1.8P | ◎ | 115 | 97% |
| Example 30 | 10% | 1.4P | ◎ | 117 | 99% |
| Example 31 | 10% | 1.8P | ◎ | 115 | 97% |
| Example 32 | 5% | 1.6P | ◎ | 116 | 98% |
| Single pigment | 0% | 4.0P | x | 100 | 89% |

Table 18 C.I. Pigment Blue 15

| | Amount of compound | Viscosity (30 rpm) | Non-flocculation property | Coloring power | Gloss (60°-60°) |
|---|---|---|---|---|---|
| Example 33 | 15% | 3.1P | ◎ | 130 | 95% |
| Single pigment | 0% | 6.6P | x | 100 | 88% |

Tabble 19 C.I. Pigment Violet 23

| | Amount of compound | Viscosity (30 rpm) | Non-flocculation property | Coloring power | Gloss (60°-60°) |
|---|---|---|---|---|---|
| Example 34 | 10% | 3.4P | ◎ | 130 | 95% |
| Single pigment | 0% | 7.0P | x | 100 | 85% |

Table 20 C.I. Pigment Red 179

| | Amount of compound | Viscosity (30 rpm) | Non-flocculation property | Coloring power | Gloss (60°-60°) |
|---|---|---|---|---|---|
| Example 35 | 10% | 2.0P | ◎ | 128 | 96% |
| Example 36 | 10% | 1.8P | ◎ | 130 | 97% |
| Example 37 | 3% | 2.3P | ◎ | 125 | 94% |
| Example 38 | 15% | 1.7P | ◎ | 132 | 99% |
| Example 39 | 10% | 2.3P | ◎ | 127 | 95% |
| Single pigment | 0% | 4.3P | x | 100 | 81% |

Table 21 C.I. Pigment Orange 43

| | Amount of compound | Viscosity (30 rpm) | Non-flocculation property | Coloring power | Gloss (60°-60°) |
|---|---|---|---|---|---|
| Example 40 | 10% | 1.9P | ◎ | 118 | 97% |
| Example 41 | 10% | 1.8P | ◎ | 121 | 98% |
| Single pigment | 0% | 3.9P | x | 100 | 88% |

Tabble 22 C.I. Pigment Yellow 108

| | Amount of compound | Viscosity (30 rpm) | Non-flocculation property | Coloring power | Gloss (60°-60°) |
|---|---|---|---|---|---|
| Example 42 | 10% | 3.5P | ◎ | 132 | 96% |
| Single pigment | 0% | 6.0P | x | 100 | 84% |

## Claims

**1.** A pigment compound represented in the form of a free acid by the following formula (I):

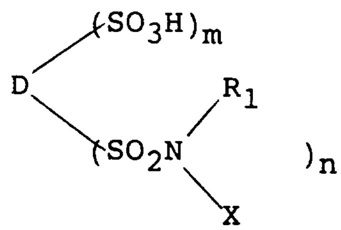

(I)

wherein D represents an organic pigment residue excluding azo and phthalocyanine pigment residues; $R_1$ represents a substituted or unsubstituted and saturated or unsaturated aliphatic hydrocarbon group having 1-10 carbon atoms or a substituted or unsubstituted aromatic hydrocarbon group having 6-10 carbon atoms; X represents a heterocyclic ring-substituted alkyl group, the alkyl group having 1-6 carbon atoms and being substituted on a carbon atom of a heterocylic ring having at least one of nitrogen atom, oxygen atom and sulfur atom, or

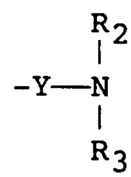

in which Y represents a straight or branched alkylene group having 1-10 carbon atoms, $R_2$ and $R_3$ independently of one another represent a substituted or unsubstituted and saturated or unsaturated aliphatic hydrocarbon group having 1-20 carbon atoms or a substituted or unsubstituted aromatic hydrocarbon group having 6-20 carbon atoms, or both $R_2$ and $R_3$ are taken together with the adjacent nitrogen atom to form a heterocyclic ring having at least one nitrogen atom, and optionally an oxygen or sulfur atom; or $R_1$ is taken together with the adjacent nitrogen atom and the

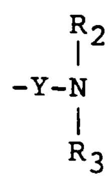

to form a heterocyclic ring having at least two nitrogen atoms; m is a number of 0-3 with the proviso that m is a number of 1-3 when $R_1$ is an unsubstituted aliphatic hydrocarbon group; n is a number of 1-4; and a total of m and n is 1-5.

**2.** A pigment compound according to claim 1, wherein D in the formula (I) represents a dioxazine, dianthraquinonyl, anthrapyrimidine, flavanthrone, anthanthrone, indanthrone, pyranthrone, violanthrone, isoviolanthrone, quinacridone, quinophthalone, diketopyrrolopyrrole, isoindolinone, perinone, perylene or thioindigo residue.

**3.** A pigment compound according to claim 1, wherein D in the formula (I) represents

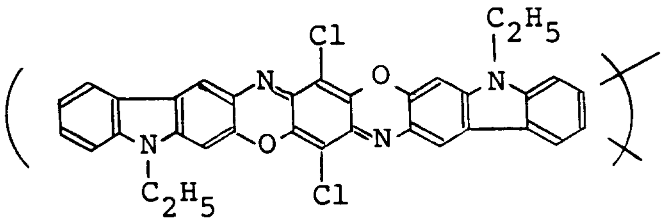

,

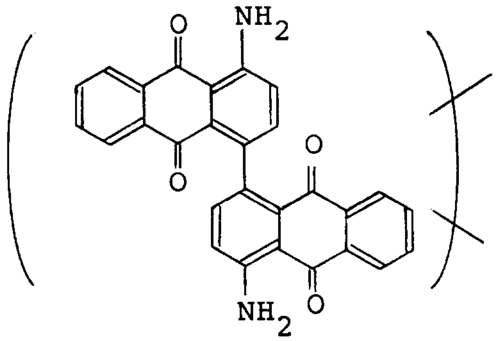

,

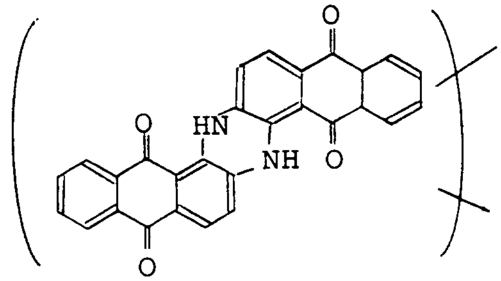

,

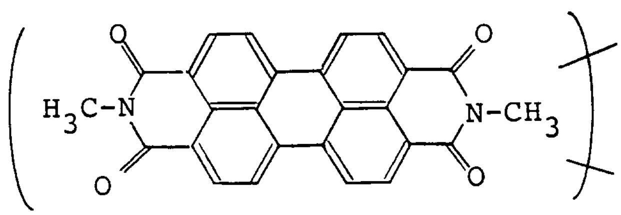

,

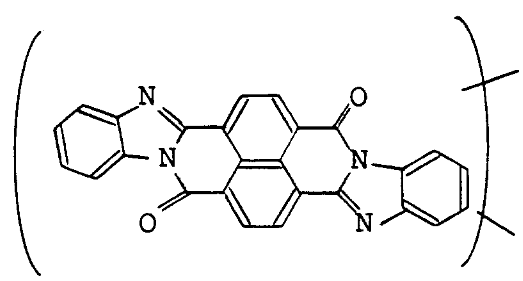

, or

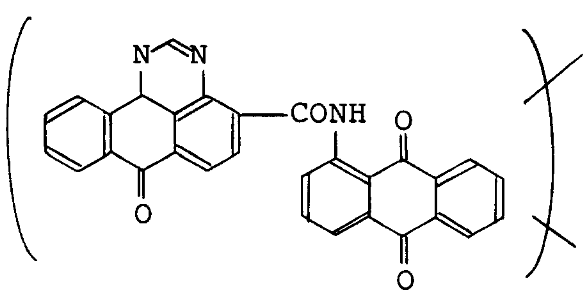

4. A pigment compound according to claim 1, wherein D in the formula (I) represents

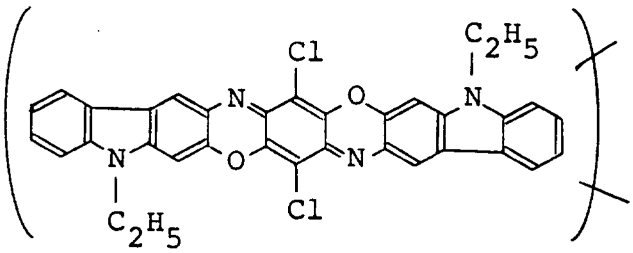

, or

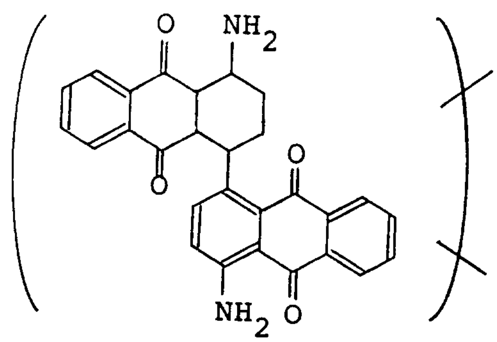

5. A pigment compound according to claim 1, wherein $R_1$ in the formula (I) represents an alkyl group having 1-6 carbon atoms which is substituted or unsubstituted with an amino group which is substituted or unsubstituted with an alkyl or hydroxyalkyl group having 1-6 carbon atoms, or an alkoxy group having 1-6 carbon atoms which is substituted or unsubstituted with a hydroxy group or an alkoxy group having 1-6 carbon atoms.

6. A pigment compound according to claim 1, wherein $R_1$ is taken together with the adjacent nitrogen atom and the

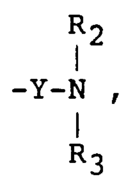

in which Y, $R_2$ and $R_3$ are as defined in claim 1, to form a heterocyclic ring represented by

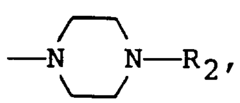

, 

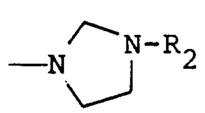

, or

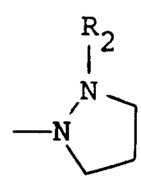

in which $R_2$ is as defined in claim 1.

7. A pigment compound according to claim 1, wherein in

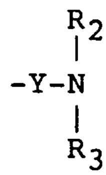

of X in the formual (I), Y represents a straight or branched alkylene group having 1-10 carbon atoms and $R_2$ and $R_3$ independently of one another represent a substituted or unsubstituted alkyl group having 1-6 carbon atoms.

8. A pigment compound according to claim 1, wherein both $R_2$ and $R_3$ are taken together with the adjacent nitrogen atom to form a hetrocyclic ring represented by

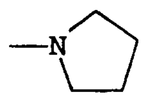 , 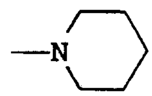 , 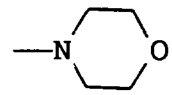 ,

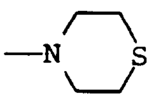 , 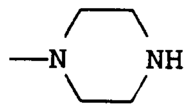 , or 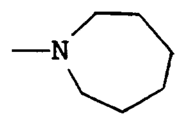 .

9. A pigment compound according to claim 1, wherein X in the formula (I) represents an alkyl group having 1-6 carbon atoms which is substituted with a heterocyclic ring represented by

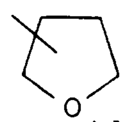 , 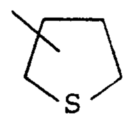 , 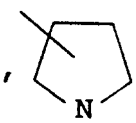 ,

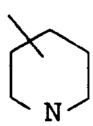 , 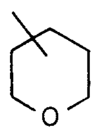 , 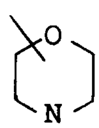 , 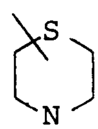 , 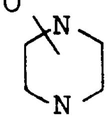 or 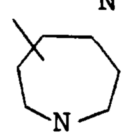 .

10. A pigment composition which comprises an organic pigment and the pigment compound of claim 1.

11. A pigment composition according to claim 10, wherein the organic pigment is a dioxazine, dianthraquinonyl, anthrapyrimidine, flavanthrone, anthanthrone, indanthrone, pyranthrone, violanthrone, isoviolanthrone, phthalocyanine, quinacridone, quinophthalone, diketopyrrolopyrrole, isoindolinone, perinone, perylene or thioindigo pigment.

12. A pigment composition according to claim 10, wherein the amount of the pigment compound is 0.1-30% by weight based on the organic pigment.

13. A method for improving pigment characteristics of an organic pigment using the pigment compound of claim 1.

14. Use of the pigment composition according to claim 10 as coating compositions, printing inks, coloration of plastics or printing of fibrous materials.

European Patent Office

# EUROPEAN SEARCH REPORT

Application Number
EP 93 12 0683

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,A | GB-A-2 071 683 (TOYO INK MANUFACTORING CO. LTD.)<br>* examples * | 1-14 | C09B67/20<br>C09B67/22 |
| A | GB-A-2 058 813 (TOYO INK MANUFACTURING CO. LTD.)<br>* page 2, line 10 - line 11; examples * | 1-14 | |
| A | EP-A-0 395 988 (BASF AG)<br>* page 4, line 1 - page 6, line 5 * | 1-14 | |
| A | EP-A-0 360 184 (HOECHST AG)<br>* example 5 * | 1,10-12 | |

TECHNICAL FIELDS SEARCHED (Int.Cl.5)
C09B

The present search report has been drawn up for all claims

| Place of search | Date of completion of the search | Examiner |
|---|---|---|
| THE HAGUE | 22 April 1994 | Ketterer, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document